# FASCICULE DE BREVET EUROPEEN

(11) **EP 3 453 947 B1**
(45) Date de publication et mention de la délivrance du brevet: **24.03.2021**
(21) Numéro de dépôt: 18191883.0
(22) Date de dépôt: 31.08.2018
(51) Int. Cl.: F21S 41/24, F21V 8/00, F21S 43/239

(54) **BLOC OPTIQUE DE VÉHICULE À GUIDE(S) DE LUMIÈRE À PROTUBÉRANCE DE LIMITATION DE PASSAGE DE PHOTONS PARASITES**
OPTISCHER BLOCK EINES FAHRZEUGES MIT EINEM BESITZENDEN VORSPRUNG LICHTLEITER ZUR PASSAGENLIMITIERUNG VON PARASITÄREN PHOTONEN
VEHICLE OPTICAL BLOCK WITH LIGHT GUIDE(S) HAVING PROTUBERANCE(S) FOR LIMITING PASSAGE OF PHOTONS PARASITES

(30) Priorité: 12.09.2017 FR 1758397
(43) Date de publication de la demande: 13.03.2019
(73) Titulaire: PSA Automobiles SA, 78300 Poissy (FR)
(72) Inventeur: VIDEIRA, FILIPE, 78140 VELIZY VILLACOUBLAY (FR)

(56) Documents cités:
- EP-A1- 3 190 333
- EP-A2- 2 816 276
- WO-A1-2012/059852

## Description

L'invention concerne les blocs optiques qui équipent des véhicules et qui comprennent un boîtier délimitant une cavité comportant notamment un masque, au moins un guide de lumière et au moins une source de photons.

On entend ici par « bloc optique » un dispositif lumineux assurant au moins une fonction photométrique d'éclairage ou de signalisation. Il pourra s'agir d'un feu arrière ou avant ou d'un phare ou projecteur avant.

Certains blocs optiques de véhicule, généralement de type automobile, comprennent un boîtier qui délimite une cavité dans laquelle sont installés, d'une part, au moins un guide de lumière comprenant une extrémité arrière alimentée en photons par au moins une source de photons et une extrémité avant comportant une face avant délivrant des photons guidés, et, d'autre part, un masque comprenant au moins une ouverture traversée par cette extrémité avant. Ce masque est principalement destiné à masquer les zones techniques et chaque source de photons placées en amont (ou derrière) chaque guide de lumière.

Afin de tenir compte des variations dimensionnelles des sections (transverses) des guides de lumière et des ouvertures des masques, induites par les procédés de fabrication utilisés, mais également de faciliter le passage des guides de lumière au travers des ouvertures des masques et d'éviter la génération de vibrations, il y a obligatoirement un jeu fonctionnel entre chaque ouverture d'un masque et le guide de lumière correspondant. Or, dans certains cas, ce jeu fonctionnel permet à des photons, qui sont sortis par des faces latérales d'un guide de lumière (en amont de l'ouverture correspondante), de passer au travers de cette ouverture, ce qui induit de la lumière parasite (sous forme de points lumineux et/ou de halo). Il en résulte alors une dégradation de la qualité perçue de la fonction photométrique en fonctionnement, laquelle est généralement perçue comme un défaut de fabrication.

On connait du document EP3190333A, un bloc optique conforme au préambule de la revendication 1.

L'invention a donc notamment pour but d'améliorer la situation.

Elle propose notamment à cet effet un bloc optique conforme à la partie caractérisante de la revendication 1.

Grâce à l'invention, malgré le jeu fonctionnel indispensable au niveau d'une ouverture, au moins la plupart des photons, qui sont sortis par les faces latérales d'un guide de lumière (en amont de cette ouverture), ne peut plus passer au travers de la portion d'ouverture qui est placée devant une protubérance.

Le bloc optique selon l'invention peut comporter d'autres caractéristiques qui peuvent être prises séparément ou en combinaison, et notamment :
- le/chaque guide de lumière peut présenter une section rectangulaire, et deux grandes faces latérales parallèles entre elles et deux petites faces latérales parallèles entre elles et perpendiculaires aux deux grandes faces latérales ;
   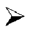 la/chaque protubérance peut être définie perpendiculairement à l'une au moins des grandes faces latérales et à la direction générale de guidage ;
- la/chaque protubérance peut être définie perpendiculairement à chaque face latérale et à la direction générale de guidage, afin de constituer une structure fermée ;
- il peut comprendre au moins deux guides de lumière, et son masque peut comprendre au moins deux ouvertures traversées respectivement par les extrémités avant des guides de lumière ;
   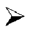 il peut comprendre des sources de photons en nombre égal au nombre de guides de lumière et alimentant respectivement les extrémités arrière de ces guides de lumière ;
- le masque peut comprendre au niveau de chaque ouverture un bord perpendiculaire à au moins une face latérale comportant une protubérance et placé devant cette protubérance ;
- la/chaque protubérance peut présenter une section de forme choisie parmi une section d'ogive et un triangle.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective du côté de la face avant, une partie d'un exemple de réalisation d'un bloc optique selon l'invention avant son installation dans un véhicule, et
- la figure 2 illustre schématiquement, dans une vue en coupe selon la ligne II-II, une partie du bloc optique de la figure 1.

L'invention a notamment pour but de proposer un bloc optique BO destiné à équiper un véhicule et comprenant un boîtier BB délimitant une cavité CB comportant notamment un masque MB, au moins un guide de lumière Gj et au moins une source de photons Sm.

Il est rappelé que l'on entend ici par « bloc optique » un dispositif lumineux assurant au moins une fonction photométrique d'éclairage ou de signalisation au moyen d'au moins un guide de lumière et d'au moins une source de photons.

On considère dans ce qui suit, à titre d'exemple non limitatif, que le véhicule est de type automobile. Il s'agit, par exemple, d'une voiture. Mais l'invention n'est pas limitée à ce type de véhicule. En effet, elle concerne tout véhicule (terrestre, maritime (ou fluvial), ou aérien), dès lors qu'il doit comprendre au moins un bloc optique.

Par ailleurs, on considère dans ce qui suit, à titre d'exemple non limitatif, que le bloc optique BO est un feu arrière. Mais il pourrait également s'agir d'un projecteur (ou phare) avant ou d'un feu avant. A titre d'exemple ce bloc optique BO assure au moins une fonction photométrique de type feu de stop.

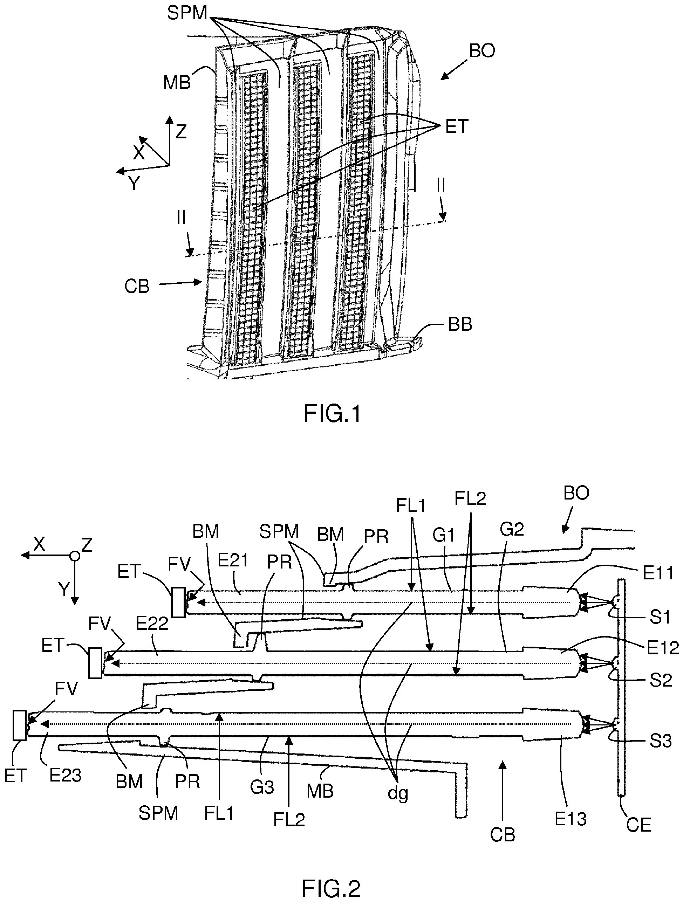

Sur les figures 1 et 2, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur les figures 1 et 2 une partie d'un exemple de réalisation d'un bloc optique BO selon l'invention, avant son installation dans un véhicule.

Comme illustré partiellement sur les figures 1 et 2, un bloc optique BO, selon l'invention, comprend un boîtier BB, un masque MB, et au moins un guide de lumière Gj et au moins une source de photons Sm qui participent à au moins une fonction photométrique. On notera qu'il comprend également, de préférence, un écran translucide ET.

Le boîtier BB est réalisé par moulage d'un matériau opaque et rigide, comme par exemple une matière plastique ou synthétique.

L'éventuel écran translucide ET est réalisé dans un matériau translucide, ayant une couleur adaptée à la fonction photométrique à assurer (par exemple rouge, orange, ou cristal), et rigide, comme par exemple une matière plastique ou synthétique. Dans ce cas, il peut être réalisé par moulage.

Le boîtier BB délimite une cavité CB logeant le masque MB, et chaque guide de lumière Gj et chaque source de photons Sm participant à la/une fonction photométrique de son bloc optique BO.

Chaque guide de lumière Gj comprend une extrémité arrière E1j alimentée en photons par au moins une source de photons Sm, et une extrémité avant E2j comportant une face avant FV délivrant des photons guidés depuis son extrémité arrière E1j. Une partie de l'éventuel écran translucide ET est placée devant (ou en aval de) l'intégralité de la face avant FV de chaque guide de lumière Gj.

Les notions d'avant et d'arrière doivent ici se comprendre par rapport au sens de propagation des photons dans chaque guide de lumière Gj depuis une source de photons Sm jusqu'à une face avant FV d'une extrémité avant E2j du guide de lumière Gj.

On notera que dans l'exemple illustré non limitativement sur les figures 1 et 2 le bloc optique BO comprend trois guides de lumière Gj (et donc j = 1 à 3). Mais le nombre de guides de lumière Gj peut prendre n'importe quelle valeur supérieure ou égale à un (1), et notamment un, deux ou quatre.

Les guides de lumière Gj peuvent présenter des sections de différentes formes, et notamment rectangulaire, carrée ou ronde. Au sein d'un même bloc optique BO, les guides de lumière Gj peuvent présenter des sections de formes identiques (comme illustré) ou différentes. Dans l'exemple illustré non limitativement sur les figures 1 et 2 les guides de lumière Gj présentent des sections rectangulaire, avec des extensions différentes suivant la direction longitudinale X, afin de donner un effet de style (notamment de profondeur). Mais leurs extensions suivant X pourraient être identiques. Par ailleurs, dans l'exemple illustré non limitativement sur la figure 1 les guides de lumière Gj présentent sensiblement la même extension suivant la direction verticale Z. Mais leurs extensions suivant Z pourraient être différentes.

On comprendra que dans l'exemple illustré non limitativement sur les figures 1 et 2 les guides de lumière Gj sont de type dit plat. Ils présentent donc chacun une section rectangulaire, et deux grandes faces latérales FL1 (k = 1) et FL2 (k = 2) parallèles entre elles et deux petites faces latérales (supérieure et inférieure, non représentées) parallèles entre elles et perpendiculaires aux deux grandes faces latérales FLk (k = 1 ou 2). Mais elles pourraient comprendre moins de quatre faces latérales FLk, et notamment une seule lorsqu'elles ont une section circulaire.

La/chaque source de photons Sm peut, par exemple, comprendre au moins une diode électroluminescente (ou LED) ou au moins une diode laser ou encore au moins une ampoule. On notera que lorsque chaque guide de lumière Gj présente une extension (ou dimension) importante suivant une direction de l'espace (ici la direction verticale Z), il est préférable que chaque source de photons Sm comprenne plusieurs diodes électroluminescentes ou laser ou plusieurs ampoules afin d'assurer un éclairage homogène au niveau de l'intégralité de la face avant FV.

On notera également que dans l'exemple illustré non limitativement sur la figure 2 le bloc optique BO comprend trois sources de photons Sm (m = 1 à 3) alimentant respectivement les trois guides de lumière Gj (j = 1 à 3). Mais le nombre de sources de photons Sm peut prendre n'importe quelle valeur supérieure ou égale à un (1). Ainsi, une même source de photons Sm peut alimenter plusieurs (au moins deux) guides de lumière Gj, ou bien plusieurs (au moins deux) sources de photons Sm peuvent alimenter un même guide de lumière Gj.

Par ailleurs, la/chaque source de photons Sm peut être installée sur une carte électronique CE avec des moyens de contrôle chargés de contrôler son fonctionnement. Cette carte électronique CE peut, par exemple, être une carte à circuits imprimés de type PCB (« Printed Circuit Board »).

Le masque MB comprend un nombre d'ouvertures Oj qui est égal au nombre de guides de lumière Gj. Par conséquent, il comprend au moins une ouverture Oj. Chaque ouverture Oj est traversée par l'extrémité avant E2j d'un guide de lumière Gj correspondant.

Dans l'exemple illustré non limitativement sur les figures 1 et 2, le masque MB comprend donc trois ouvertures O1 à 03. Mais il pourrait en comprendre plus ou moins de trois.

Chaque guide de lumière Gj est chargé de guider la plupart des photons qu'il reçoit au niveau de son extrémité arrière E1j jusqu'à son extrémité avant E2j, de sorte que ces photons se dirigent suivant une direction générale de guidage dg entre ces extrémités arrière E1j et avant E2j. Dans l'exemple illustré, la direction générale de guidage dg est parallèle à la direction longitudinale X. On notera que la direction générale de guidage dg n'est pas forcément une droite. Elle peut en effet présenter au moins une courbure lorsque le guide de lumière Gj présente lui-même au moins une courbure.

Selon l'invention, chaque guide de lumière Gj comprend sur au moins une face latérale FLk, au voisinage de l'ouverture Oj correspondante et avant cette dernière (Oj), au moins une protubérance PR. Cette dernière (PR) est définie perpendiculairement à la direction générale de guidage dg et est agencée de manière à limiter (et si possible empêcher) la sortie de photons par une portion de l'ouverture Oj qui est située devant elle (PR).

Ainsi, malgré le jeu fonctionnel indispensable la plupart (et si possible la totalité) des photons « parasites » (sortis par les faces latérales FLk d'un guide de lumière Gj (en amont de l'ouverture Oj correspondante)) ne peut plus passer au travers de la portion d'ouverture qui est placée devant une protubérance PR du fait que cette dernière (PR) constitue une espèce de barrière qu'il faut contourner ou traverser (ce qui provoque des changements de direction éventuellement multiples). Par conséquent, il n'y a plus (ou quasiment plus) de lumière parasite (sous forme de points lumineux et/ou de halo) au niveau de chaque ouverture Oj, ce qui évite de dégrader la qualité perçue de la fonction photométrique en fonctionnement.

Dans l'exemple illustré non limitativement sur les figures 1 et 2, chaque guide de lumière Gj ne comprend qu'une seule protubérance PR. Mais au moins un guide de lumière Gj pourrait comprendre au moins deux protubérances PR.

Lorsqu'un guide de lumière Gj présente une section rectangulaire (et donc est de type plat, comme illustré), sa protubérance PR peut être définie perpendiculairement à l'une au moins de ses grandes faces latérales FL1 et FL2 et à la direction générale de guidage dg. On comprendra que pour augmenter l'importance de la limitation du passage des photons parasites au travers d'une ouverture Oj, il est préférable qu'une protubérance PR soit définie perpendiculairement à chaque grande face latérale FL1 ou FL2 et à la direction générale de guidage dg du guide de lumière Gj.

On notera que pour augmenter encore plus (et de façon maximale) l'importance de la limitation du passage des photons parasites au travers d'une ouverture Oj, la protubérance PR d'un guide de lumière Gj peut être définie perpendiculairement à chaque face latérale FLk et à la direction générale de guidage dg, afin de constituer une structure fermée.

Il est important de noter que lorsqu'une protubérance PR constitue une structure fermée, il n'est pas obligatoire qu'elle présente partout la même hauteur depuis sa face latérale FLk. De même, lorsque plusieurs protubérances PR sont définies indépendamment les unes des autres sur plusieurs faces latérales FLk, il n'est pas obligatoire qu'elles présentent toutes la même hauteur depuis leur face latérale FLk. La hauteur d'une protubérance PR d'une face latérale FLk est en effet choisie en fonction de la distance séparant cette dernière (FLk) de la sous-partie SPM du masque MB voisine. Il ne faut en effet pas que l'extrémité libre d'une protubérance PR soit au contact ou quasi au contact de la sous-partie de masque SPM voisine car cela pourrait engendrer un blocage lors de l'introduction de l'extrémité avant E2j au travers de l'ouverture Oj correspondante et/ou des vibrations.

On notera également que pour augmenter l'importance de la limitation du passage des photons parasites au travers d'une ouverture Oj, le masque MB peut avantageusement comprendre au niveau de cette ouverture Oj un bord BM perpendiculaire à au moins une face latérale FLk comportant une protubérance PR et placé devant (ou en aval de) cette protubérance PR. C'est notamment le cas dans l'exemple illustré non limitativement sur la figure 2. On comprendra qu'en présence d'un tel bord BM on dispose d'une double barrière qui est particulièrement difficile à franchir. Bien entendu, la hauteur de ce bord BM dépend du jeu fonctionnel qui doit être respecté localement. Par conséquent, cette hauteur peut varier d'une sous-partie de masque SPM à une autre, comme dans l'exemple illustré non limitativement sur la figure 2.

On notera également que chaque protubérance PR comporte une face externe ayant fait l'objet d'un traitement de surface induisant une diffusion de photons multidirectionnelle, ou une sortie privilégiée dans au moins une direction qui ne passe pas par l'ouverture Oj qui est placée devant elle (PR), ou encore une réflexion. Ce traitement de surface peut, par exemple, consister en un polissage ou grainage de la face externe, ou le dépôt d'un revêtement réfléchissant sur la face externe, ou la génération sur la face externe de facettes ou d'éléments tridimensionnels tels que des stries ou rainures, des nervures, ou des micro-plots.

On notera également que chaque protubérance PR peut présenter une section de différentes formes, et notamment une section d'ogive et un triangle.

On notera également que chaque guide de lumière Gj peut, par exemple, être réalisé par moulage d'une matière telle que le polycarbonate (ou PC) ou le poly-méthacrylate de méthyle (ou PMMA).

## Revendications

1. Bloc optique (BO) destiné à équiper un véhicule et comprenant un boîtier (BB) délimitant une cavité (CB) dans laquelle sont installés i) au moins un guide de lumière (Gj) comprenant une extrémité arrière (E1j) alimentée en photons par au moins une source de photons (Sm) et une extrémité avant (E2j) comportant une face avant (FV) délivrant des photons guidés, et ii) un masque (MB) comprenant au moins une ouverture (Oj) traversée par ladite extrémité avant (E2j), ledit guide de lumière (Gj) comprenant sur au moins une face latérale (FLk), au voisinage de ladite ouverture (Oj) et avant cette dernière (Oj), au moins une protubérance (PR) définie perpendiculairement à une direction générale de guidage desdits photons entre lesdites extrémités arrière (E1j) et avant (E2j) et limitant une sortie de photons par une portion de cette ouverture (Oj) située devant elle (PR), **caractérisé en ce que** ladite protubérance (PR) a une face externe ayant fait l'objet d'un traitement de surface induisant une diffusion de photons multidirectionnelle, ou une sortie privilégiée dans au moins une direction ne passant pas par ladite ouverture (Oj) placée devant elle (PR), ou une réflexion.

2. Bloc optique selon la revendication 1, **caractérisé en ce que** ledit guide de lumière (Gj) présente une section rectangulaire et deux grandes faces latérales (FL1, FL2) parallèles entre elles et deux petites faces latérales parallèles entre elles et perpendiculaires auxdites deux grandes faces latérales (FL1, FL2).

3. Bloc optique selon la revendication 2, **caractérisé en ce que** ladite protubérance (PR) est définie perpendiculairement à l'une au moins desdites grandes faces latérales (FL1, FL2) et à ladite direction générale de guidage.

4. Bloc optique selon la revendication 1 ou 2, **caractérisé en ce que** ladite protubérance (PR) est définie perpendiculairement à chaque face latérale (FLk) et à ladite direction générale de guidage, afin de constituer une structure fermée.

5. Bloc optique selon l'une des revendications 1 à 4, **caractérisé en ce qu'**il comprend au moins deux guides de lumière (Gj), et **en ce que** ledit masque (MB) comprend au moins deux ouvertures (Oj) traversées respectivement par lesdites extrémités avant (E2j) des guides de lumière (Gj).

6. Bloc optique selon la revendication 5, **caractérisé en ce qu'**il comprend des sources de photons (Sm) en nombre égal au nombre de guides de lumière (Gj) et alimentant respectivement lesdites extrémités arrière (E1j) de ces guides de lumière (Gj).

7. Bloc optique selon l'une des revendications 1 à 6, **caractérisé en ce que** ledit masque (MB) comprend au niveau de chaque ouverture (Oj) un bord (BM) perpendiculaire à au moins une face latérale (FLk) comportant une protubérance (PR) et placé devant cette protubérance (PR).

8. Bloc optique selon l'une des revendications 1 à 7, **caractérisé en ce que** ladite protubérance (PR) présente une section de forme choisie parmi une section d'ogive et un triangle.

9. Véhicule, **caractérisé en ce qu'**il comprend au moins un bloc optique (BO) selon l'une des revendications précédentes.

## Patentansprüche

1. Optische Einheit (BO), die dazu bestimmt ist, ein Fahrzeug auszurüsten, und die ein Gehäuse (BB) umfasst, das einen Hohlraum (CB) definiert, in dem i) mindestens ein Lichtleiter (Gj) installiert ist, der ein hinteres Ende (E1j), das von mindestens einer Photonenquelle (Sm) mit Photonen versorgt wird, und ein vorderes Ende (E2j) umfasst, das eine vordere Fläche (FV) aufweist, die geführte Photonen liefert, und ii) eine Maske (MB) mit mindestens einer Öffnung (Oj), durch die das vordere Ende (E2j) hindurchgeht, wobei der Lichtleiter (Gj) auf mindestens einer Seitenfläche (FLk) in der Nähe der Öffnung (Oj) und vor dieser (Oj) angeordnet ist, mindestens eine Ausstülpung (PR), die senkrecht zu einer allgemeinen Führungsrichtung der Photonen zwischen dem hinteren (E1j) und dem vorderen (E2j) Ende definiert ist und einen Austritt von Photonen durch einen Teil dieser Öffnung (Oj), der sich vor ihr befindet, begrenzt (PR), **dadurch gekennzeichnet, dass** die Ausstülpung (PR) eine Außenfläche aufweist, die einer Oberflächenbehandlung unterzogen wurde, die eine multidirektionale Photonenstreuung oder einen privilegierten Austritt in mindestens einer Richtung, die nicht durch die vor ihr (PR) angeordnete Öffnung (Oj) verläuft, oder eine Reflexion induziert.

2. Optischer Block nach Anspruch 1, **dadurch gekennzeichnet, dass** der Lichtleiter (Gj) einen rechteckigen Querschnitt und zwei große Seitenflächen (FL1, FL2) parallel zueinander und zwei kleine Seitenflächen parallel zueinander und senkrecht zu den beiden großen Seitenflächen (FL1, FL2) aufweist.

3. Optischer Block nach Anspruch 2, **dadurch gekennzeichnet, dass** die Ausstülpung (PR) senkrecht zu mindestens einer der großen Seitenflächen (FL1, FL2) und zu der allgemeinen Führungsrichtung definiert ist.

4. Optischer Block nach Anspruch 1 oder 2, **dadurch gekennzeichnet, dass** die Ausstülpung (PR) senkrecht zu jeder Seitenfläche (FLk) und zu der allgemeinen Führungsrichtung definiert ist, um eine geschlossene Struktur zu bilden.

5. Optischer Block nach einem der Ansprüche 1 bis 4, **dadurch gekennzeichnet, dass** er mindestens zwei Lichtleiter (Gj) umfasst, und dass die Maske (MB) mindestens zwei Öffnungen (Oj) umfasst, die jeweils von den vorderen Enden (E2j) der Lichtleiter (Gj) durchquert werden.

6. Optischer Block nach Anspruch 5, **dadurch gekennzeichnet, dass** er Photonenquellen (Sm) in einer Anzahl umfasst, die der Anzahl der Lichtleiter (Gj) entspricht und jeweils die hinteren Enden (E1j) dieser Lichtleiter (Gj) speist.

7. Optischer Block nach einem der Ansprüche 1 bis 6, **dadurch gekennzeichnet, dass** die genannte Maske (MB) an jeder Öffnung (Oj) eine Kante (BM) aufweist, die senkrecht zu mindestens einer Seitenfläche (FLk) verläuft, die eine Ausstülpung (PR) aufweist und vor dieser Ausstülpung (PR) angeordnet ist.

8. Optischer Block nach einem der Ansprüche 1 bis 7, **dadurch gekennzeichnet, dass** die Ausstülpung (PR) einen Abschnitt mit einer Form aufweist, die aus einem ogiven Abschnitt und einem Dreieck ausgewählt ist.

9. Fahrzeug, **dadurch gekennzeichnet, dass** es mindestens einen optischen Block (BO) nach einem der vorhergehenden Ansprüche umfasst.

## Claims

1. Optical unit (BO) intended to equip a vehicle and comprising a housing (BB) delimiting a cavity (CB) in which are installed i) at least one light guide (Gj) comprising a rear end (E1j) supplied with photons by at least one photon source (Sm) and a front end (E2j) comprising a front face (FV) delivering guided photons, and ii) a mask (MB) comprising at least one opening (Oj) through which said front end (E2j) passes, said light guide (Gj) comprising on at least one lateral face (FLk), in the vicinity of said opening (Oj) and before the latter (Oj), at least one protuberance (PR) defined perpendicularly to a general direction of guidance of said photons between said rear (E1j) and front (E2j) ends and limiting a photon exit through a portion of this opening (Oj) located in front of it (PR), **characterized in that** said protuberance (PR) has an external face having been subjected to a surface treatment inducing multidirectional photon scattering, or a privileged exit in at least one direction not passing through said opening (Oj) placed in front of it (PR), or reflection.

2. Optical block according to claim 1, **characterized in that** said light guide (Gj) has a rectangular cross-section and two large lateral faces (FL1, FL2) parallel to each other and two small lateral faces parallel to each other and perpendicular to said two large lateral faces (FL1, FL2).

3. Optical block according to claim 2, **characterized in that** said protrusion (PR) is defined perpendicularly to at least one of said large lateral faces (FL1, FL2) and to said general direction of guidance.

4. Optical block according to claim 1 or 2, **characterized in that** said protuberance (PR) is defined perpendicularly to each lateral face (FLk) and to said general direction of guidance, in order to constitute a closed structure.

5. Optical block according to one of claims 1 to 4, **characterized in that** it comprises at least two light guides (Gj), and **in that** said mask (MB) comprises at least two openings (Oj) traversed respectively by said front ends (E2j) of the light guides (Gj).

6. Optical block according to claim 5, **characterized in that** it comprises a number of photon sources (Sm) equal to the number of light guides (Gj) and respectively feeding said rear ends (E1j) of these light guides (Gj).

7. Optical block according to one of claims 1 to 6, **characterized in that** said mask (MB) comprises at each opening (Oj) an edge (BM) perpendicular to at least one lateral face (FLk) having a protuberance (PR) and placed in front of this protuberance (PR).

8. Optical block according to one of claims 1 to 7, **characterized in that** said protuberance (PR) has a section with a shape selected from a section of an ogive and a triangle.

9. Vehicle, **characterized in that** it comprises at least one optical block (BO) according to one of the preceding claims.
